# EUROPEAN PATENT APPLICATION

(11) **EP 4 170 409 A1**
(43) Date of publication of application: **26.04.2023**
(21) Application number: 22203180.9
(22) Date of filing: 24.10.2022
(51) Int. Cl.: G02B 21/26

(54) **XZ STAGE FIXING MODULE**

(30) Priority: 25.10.2021 KR 20210142923
(71) Applicant: Huvitz Co., Ltd., Anyang-si, Gyeonggi-do 14055 (KR)
(72) Inventor: LEE, Young Woo, 14055 Gyeonggi-do (KR); KIM, Chang Sung, 14055 Gyeonggi-do (KR)
(74) Representative: IPAZ

(57) **Abstract**

Disclosed is a XZ stage fixing module that does not move when a force is applied to the XZ stage in the power OFF state. A XZ stage fixing module comprises: a first moving module 10 comprising a first driving gear 12 providing a driving power, a first spur gear 14 that is engaged and rotated with the first driving gear 12, a first rack gear 16 that is engaged with the other end of the first spur gear 14 and is moved with a stage 5 in the X-direction, and a first linear solenoid rack gear module 18 that is detachably engaged with the other end of the first driving gear 12 and works as a brake for the first driving gear 12; and a second moving module 20 comprising a second driving gear 22 providing a driving power, a second spur gear 24 that is engaged and rotated with the second driving gear 22, a second rack gear 26 that is engaged with the other end of the second spur gear 24 and is moved with the first moving module 10 and the stage 5 in the Z-direction, and a second linear solenoid rack gear module 28 that is detachably engaged with the other end of the second driving gear 22 and works as a brake for the second driving gear 22.

## Description

### CROSS-REFERENCE TO RELATED APPLICATION

This application claims benefit of priority to Korean Patent Application No. 10-2021-0142923 filed on October 25, 2021, the entire contents of which are incorporated herein by reference.

### FIELD OF THE DISCLOSURE

The present invention relates to a XZ stage fixing module, and more particularly, to a XZ stage fixing module in which a stage does not move even when force is applied to the X and Z directions of the stage in a power-OFF state.

### BACKGROUND

Microscope is a device to observe an observation object (such as a sample) quickly and accurately and includes observation parts, connectors to connect the observation parts and a stage for locating the object. An observer places the observation object on the stage or substage of the microscope and observes the object through an eyepiece and an objective lens. If necessary, filters such as polarized light, glare light, and DIC are inserted into the lenses to observe the object.

When observing the object, the observer observes through an eyepiece unit comprising the eyepiece and the like. At this time, the observer's eyes are fixed to the eyepiece unit. Therefore, in order to focus on the observation object, the observer must adjust a X, Y, and Z-axis locations of the observation object with his/her both hands only. The Y-axis movement of the stage or substage on which the observation object is located is controlled using knobs, and the X-axis and Z-axis movements are controlled by moving the stage in X and Z directions. Thereby, the vertical and horizontal locations of the observation object are adjusted. After the location of the observation object is adjusted, in order for the observer to observe the observation object quickly and accurately, the observation object should be fixed without being shaken.

The stage is driven in X and Z directions by the X-axis and Z-axis movement control knobs, respectively. Common driving mechanisms can be gear type, belt type, wire type, and the like. All of the above drive mechanisms uses frictional forces. In the case of the belt type, there is an advantage that the sensitivity or force of the movement of the observation object can be adjusted by adjusting the tension of the belt, and thus it is widely used.

Korean Patent Publication No. 10-2011-0110966 discloses a wide-type XY-stage for a microscope including a brake knob having a brake function to prevent X-direction and Y-direction movement of the sample when an external impact is applied to the stage.

In the case of the gear type, it can be used stably in vibration condition. However, the conventional XZ stage has a disadvantage in that it moves freely when a force is applied to the stage in a power-OFF state.

### Prior Art Literature

(Patent Document 1) Patent Publication No. 10-2011-0110966

### SUMMARY OF THE INVENTION

### TECHNICAL OBJECTS

It is an object of the present invention to provide a XZ stage fixing module, which prevents the movement of the stage (a moving plate) in X-direction and Z-direction, so that the location of the observation object does not change by the external impact after fixing the location of the observation object, such as a sample, on the stage.

It is another object of the present invention to provide a XZ stage fixing module, which prevents the movement of the stage when an external force is applied to the stage in a power OFF state by using a linear solenoid as a brake.

### TECHNICAL SOLUTION

In order to achieve the objects above, the present invention provides a XZ stage fixing module, comprising: a first moving module 10 comprising a first driving gear 12 providing a driving power, a first spur gear 14 that is engaged and rotated with the first driving gear 12, a first rack gear 16 that is engaged with the other end of the first spur gear 14 and is moved with a stage 5 in the X-direction, and a first linear solenoid rack gear module 18 that is detachably engaged with the other end of the first driving gear 12 and works as a brake for the first driving gear 12; and a second moving module 20 comprising a second driving gear 22 providing a driving power, a second spur gear 24 that is engaged and rotated with the second driving gear 22, a second rack gear 26 that is engaged with the other end of the second spur gear 24 and is moved with the first moving module 10 and the stage 5 in the Z-direction, and a second linear solenoid rack gear module 28 that is detachably engaged with the other end of the second driving gear 22 and works as a brake for the second driving gear 22.

### EFFECTS OF THE INVENTION

The XZ stage fixing module in accordance with the present invention can obtain the XZ stage fixing module in which the location of the observation object does not change even by the external shock in a power-OFF state by using a linear solenoid as a brake.

### BRIEF DESCRIPTION OF THE DRAWINGS

Fig. 1 is a drawing for illustrating a XZ stage fixing module in accordance with one embodiment of the present invention.
Figs. 2a and 2b are drawings for illustrating a driving of the XZ stage fixing module in accordance with one embodiment of the present invention.
Figs. 3a and 3b are drawings for illustrating a driving of the first linear solenoid rack gear module by the power state in the XZ stage fixing module in accordance with one embodiment of the present invention.

### DETAILED DESCRIPTION OF THE PREFERRED EMBODIMENTS

Hereinafter, the present invention will be described in detail with reference to the accompanying drawings.

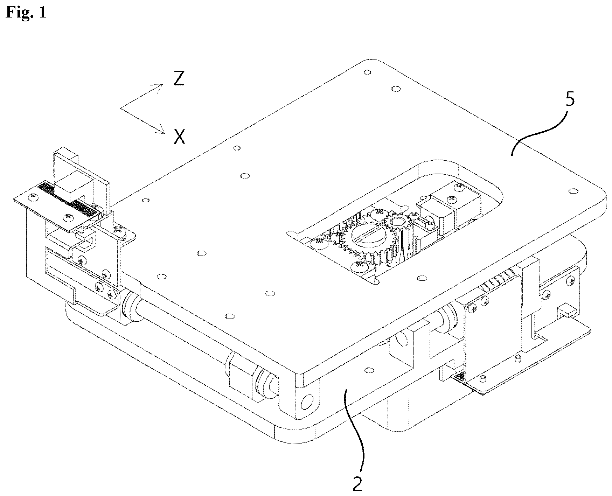

Fig. 1 is a drawing for illustrating a XZ stage fixing module in accordance with one embodiment of the present invention. As shown in Fig. 1, the XZ stage fixing module in accordance with one embodiment of the present invention horizontally moves a stage 5, thereby an observation object (not shown in Fig. 1) on the stage 5, along the X-axis and/or the Z-axis so that the observation object such as a sample, can be observed with an observation equipment such as a microscope. In the present invention, a linear solenoid rack gear module is applied to a conventional module that moves the stage 5 in X and/or Z directions. The linear solenoid rack gear module works as a brake according to a power state. Thus, the locations of the stage 5 and the observation object do not change even by an external force is applied in a power off state.

In the XZ stage fixing module in accordance with the present invention, the XZ stage may have a driving mechanism similar to that of the conventional XZ stage and may be moved in a similar manner. For example, it may include a base frame comprising a module moving means, a fixed frame located on the base frame, and a stage frame located on the fixed frame and in which the observation object is located. But the XZ stage driving mechanism is not limited thereto, and may comprise conventional features for driving the stage 5.

The XZ stage fixing module in accordance with the present invention is located on a base frame 2. Specifically, it includes a first moving module 10 comprising a first driving gear 12 providing a driving power, a first spur gear 14 that is engaged and rotated with the first driving gear 12, a first rack gear 16 that is engaged with the other end of the first spur gear 14 and is moved with the stage 5 in the X-direction, and a first linear solenoid rack gear module 18 that is detachably engaged with the other end of the first driving gear 12 and works as a brake for the first driving gear 12; and a second moving module 20 comprising a second driving gear 22 providing a driving power, a second spur gear 24 that is engaged and rotated with the second driving gear 22, a second rack gear 26 that is engaged with the other end of the second spur gear 24 and is moved with the first moving module 10 and the stage 5 in the Z-direction, and a second linear solenoid rack gear module 28 that is detachably engaged with the other end of the second driving gear 22 and works as a brake for the second driving gear 22.

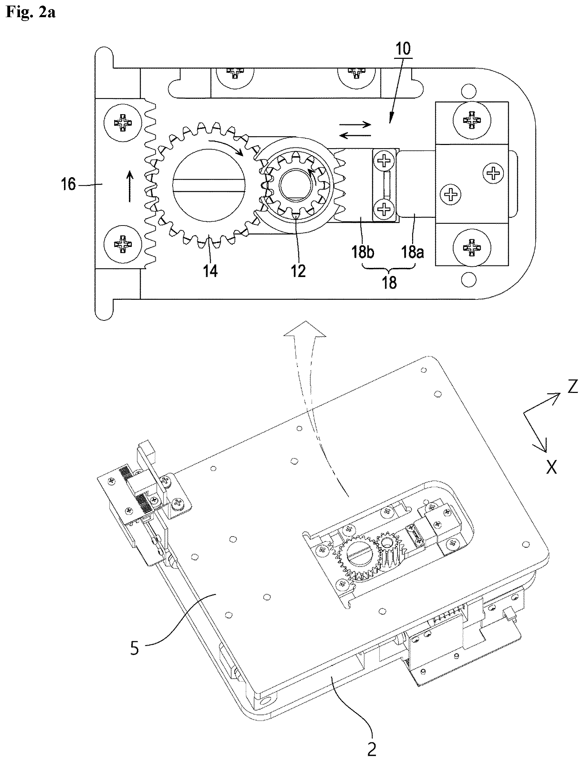

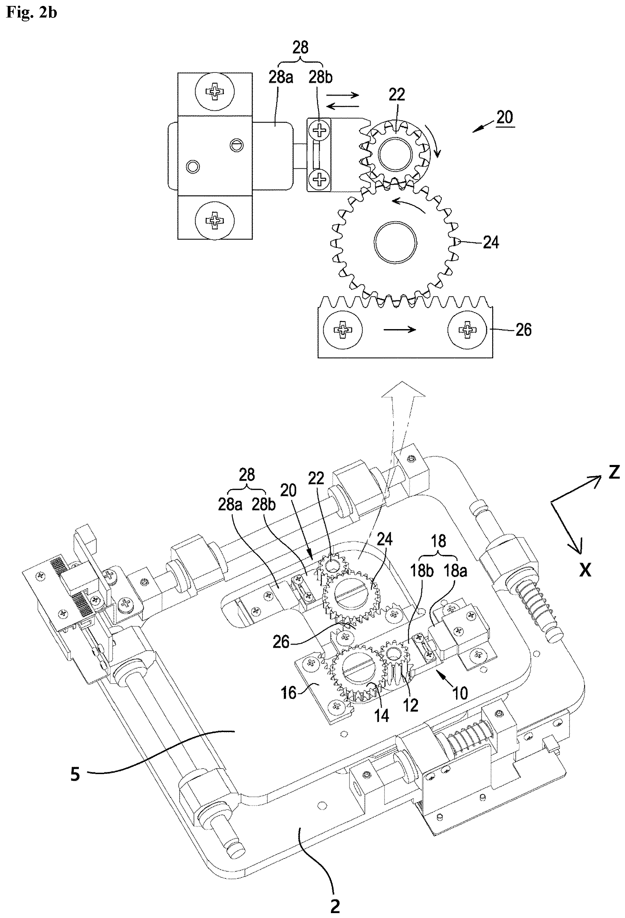

Figs. 2a and 2b are drawings for illustrating a driving of the XZ stage fixing module in accordance with one embodiment of the present invention. Specifically, Fig. 2a is a view for showing that the stage 5 is driven in the X-axis direction by the first moving module 10. Fig. 2b is a view for showing that the stage 5 is driven in the Z-axis direction by the second moving module 20. As shown in Figs. 2a and 2b, the first driving gear 12 of the first moving module 10 drives the first rack gear 16 in the X-direction through the first spur gear 14. The first driving gear 12 rotates by a motor (not shown), and the power generated by the first driving gear 12 is transferred to the first rack gear 16 through the first spur gear 14, namely through gear engagements.

When the first driving gear 12 is rotated, the first spur gear 14 engaged with the first driving gear 12 is rotated in the opposite direction. For example, when the first driving gear 12 is rotated counterclockwise, the first spur gear 14 is rotated clockwise. The other end of the first spur gear 14 (for example, the opposite end of one end of the first spur gear 14 engaged with the first driving gear 12) is engaged with the first rack gear 16. Thus, when the first spur gear 14 is rotated, the first rack gear 16 is driven together, and accordingly, the stage 5, which is connected with the first rack gear 16, is moved along the X-axis. At this time, the gears of the first driving gear 12 and the first spur gear 14 are engaged with each other. When the first driving gear 12 is rotated, the first rack gear 16 is moved in the X-axis direction. The stage 5 connected to the first rack gear 16 also is moved in the X-axis direction. Although not shown in the drawings, since the first rack gear 16 is connected to the stage 5, when the first rack gear 16 is moved, the stage 5 is moved in the X-axis direction.

In the same way, as shown in Fig. 2b, when the second driving gear 22 of the second moving module 20 is rotated, the second spur gear 24 is rotated in the opposite direction. When the second spur gear 24 is rotated, the engaged second rack gear 26 is moved in the Z-axis direction, so that the first moving module 10 and the stage 5 connected to the second rack gear 26 also are moved in the Z-axis direction.

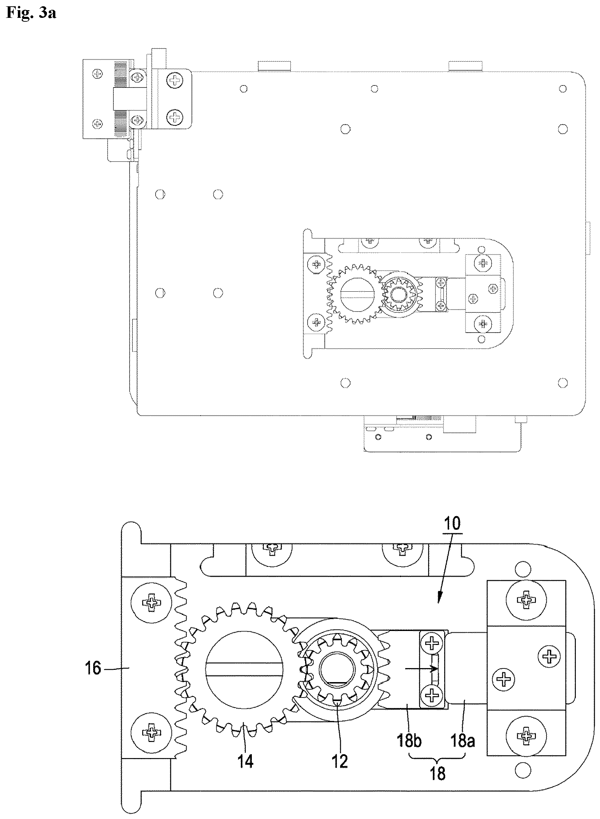

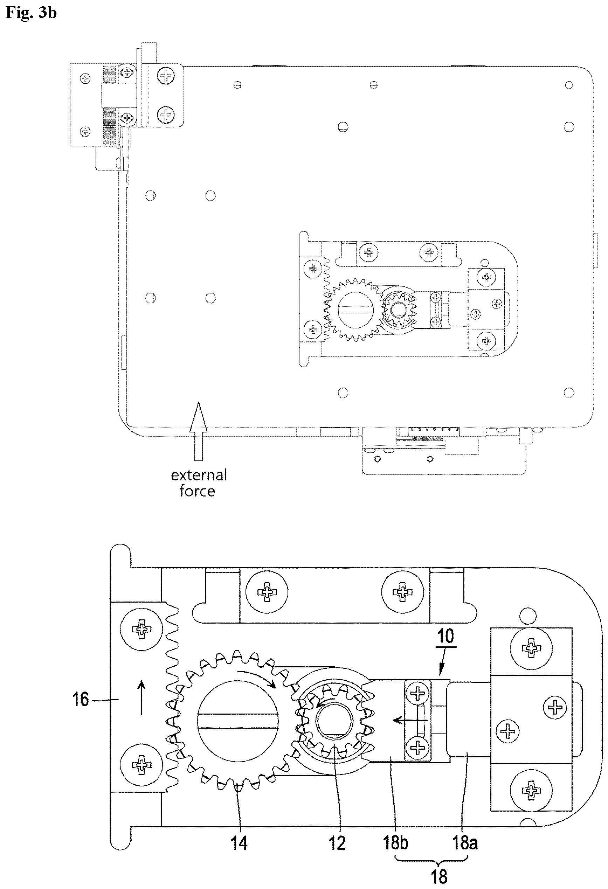

Figs. 3a and 3b are drawings for illustrating a driving of a first linear solenoid rack gear module by the power "ON" state in the XZ stage fixing module in accordance with the present invention. As shown in Figs. 3a and 3b, the first linear solenoid rack gear module 18 is a brake module, which can be operated according to the power "ON" or "OFF" state to fix the location of the observation object.

In general, when the power is turned OFF in the conventional XZ stage, the power is not applied to the motor. For this reason, when the external force is applied to the stage, there is a problem in that the locations of the stage and the observation object are changed. On the other hand, the XZ stage fixing module in accordance with the present invention includes a brake module using a linear solenoid. In the power OFF state when the power is turned off, the rack gear of the linear solenoid is engaged with the first driving gear 12 and the second driving gear 22, so the locations of the stage 5 and the observation object do not change.

Specifically, the first linear solenoid rack gear module 18 comprises a first linear solenoid 18a, and a first rack gear 18b that is connected at one end of the first linear solenoid 18a and detachably engaged with the first driving gear 12 for preventing the rotation of the first driving gear 12.

The first linear solenoid 18a is driven in a push-pull type. For example, the first linear solenoid 18a includes a spring (not shown in the drawing) therein for pushing the first rack gear 18b. Specifically, the first linear solenoid 18a and the first rack gear 18b may move to left direction (push movement) by an expansion force produced by the spring when the power is OFF state. The first linear solenoid 18a and the first rack gear 18b may move to right direction by the function of solenoid when the power is ON state (pull movement). Specifically, the first rack gear 18b connected to the first linear solenoid 18a is moved in left or right direction according to the power state, for example, by the force from the spring or solenoid.

When the power is turned on (power ON state, Fig. 3a), the first linear solenoid 18a works (a magnetic force is generated by the current flowing through a coil), and the first rack gear 18b is pulled backwardly by the first linear solenoid 18a. At this time, the spring can be compressed. At this time, the first linear solenoid rack gear module 18 is detached (namely, separated, located away) from the first driving gear 12, and the first driving gear 12 can be driven (namely, rotated). Therefore, the first driving gear 12 is operated without the interference of the first linear solenoid rack gear module 18, and the first rack gear 16 is moved, so that the stage 5 connected to the first rack gear 16 is moved. In the present invention, the power is supplied to the linear solenoid 18a, 28a and to drive the driving gear 12, 22.

On the other hand, when the power is turned off (power OFF state, Fig. 3b), the first linear solenoid 18a does not work and the first rack gear 18b is pushed forwardly for example, by an expansion force produced by the spring in the first linear solenoid 18a. At this time, the compressed spring is restored by the original elastic force, and the rack gear 18b of the first linear solenoid rack gear module 18 is engaged with the first driving gear 12. Since the first driving gear 12 is in the fixed state that cannot rotate, it is possible to fix the location of the stage 5 even when the external force is applied.

The magnetic force of the linear solenoid rack gear module can be varied according to the amount and direction of the power applied. The movable body(e.g., the rack gear 18b) can be moved by the magnetic force of the linear solenoid rack gear module. Thus, the first linear solenoid 18a pushes or pulls the rack gear 18b according to the power ON or OFF state, for example, by the combination of the magnetic force of the solenoid and the elastic (expansion) force of the spring.

Accordingly, in the power OFF state in which the power is turned off, the rack gear 18b of the first linear solenoid rack gear module 18 is engaged with and fixed to the first driving gear 12, and thus works as a brake. In the power ON state in which the power is turned on, the rack gear 18b is separated from the first driving gear 12 so as not to interfere with the movement(rotation) of the first driving gear 12.

The second moving module 20 works in the same way as the first moving module 10, as described above. The second linear solenoid module 28 also works in the same way as the first linear solenoid module 18. The second linear solenoid rack gear module 28 comprises a second linear solenoid 28a, and a second rack gear 28b that is connected at one end of the second linear solenoid 28a and detachably engaged with the second driving gear 22 for preventing the rotation of the second driving gear 22. The second linear solenoid 28a is driven in a push-pull type. The driving mechanism of the second linear solenoid module 28 is the same as that of the first linear solenoid module 18.

Specifically, when the power is turned on, the second linear solenoid 28a works (a magnetic force is generated by the current flowing through a coil), and the second rack gear 28b is pulled backwardly by the second linear solenoid 28a. At this time, the spring in the second linear solenoid 28a can be compressed. And, the second linear solenoid rack gear module 28 is detached (namely, separated, located away) from the second driving gear 22, and the second driving gear 22 can be driven (namely, rotated). When the power is turned off, the second linear solenoid 28a does not work and the second rack gear 28b is pushed forwardly for example, by an expansion force produced by the compressed spring in the second linear solenoid 28a. At this time, the compressed spring is restored (expanded) by the original elastic force, and the second rack gear 28b of the second linear solenoid rack gear module 28 is engaged with the second driving gear 22.

Therefore, the XZ stage fixing module in accordance with the present invention comprises the first and second linear solenoid modules 18, 28, and when a force is applied to the XZ stage, the rack gear 18b, 28b of the first and second linear solenoid modules 18, 28 is engaged with the first and second driving gears 12, 22, making an immovable state. Therefore, even if an external force is applied, the first and second driving gears 12, 22 cannot rotate, and the location of the observation object does not change. Conversely, in the power ON state, the first and second linear solenoid modules 18, 28 are powered on, and the rack gears 18b, 28b engaged with the first and second driving gears 12, 22 are separated from the first and second driving gears 12, 22, and thus, the XZ stage moves according to the rotation of the motor, namely, the rotations of the first and second driving gears 12, 22.

Although the present disclosure has been described above with reference to specific embodiments and drawings, the present disclosure is not limited to the specific embodiments described above and the drawings. Reference numerals are added in the following claims for easy understanding, but the scope of the following claims is not limited by the reference numerals and what is shown in the drawings, and should be construed to encompass all modifications, equivalent constructions and functions of the exemplary embodiments.

## Claims

1. A XZ stage fixing module, comprising:
a first moving module (10) comprising a first driving gear (12) providing a driving power, a first spur gear (14) that is engaged and rotated with the first driving gear (12), a first rack gear (16) that is engaged with the other end of the first spur gear (14) and is moved with a stage (5) in the X-direction, and a first linear solenoid rack gear module (18) that is detachably engaged with the other end of the first driving gear (12) and works as a brake for the first driving gear (12); and
a second moving module (20) comprising a second driving gear (22) providing a driving power, a second spur gear (24) that is engaged and rotated with the second driving gear (22), a second rack gear (26) that is engaged with the other end of the second spur gear (24) and is moved with the first moving module (10) and the stage (5) in the Z-direction, and a second linear solenoid rack gear module (28) that is detachably engaged with the other end of the second driving gear (22) and works as a brake for the second driving gear (22).

2. The XZ stage fixing module of claim 1, wherein the first linear solenoid rack gear module (18) comprises a first linear solenoid (18a), and a first rack gear (18b) that is connected at one end of the first linear solenoid (18a) and detachably engaged with the first driving gear (12) for preventing the rotation of the first driving gear (12).

3. The XZ stage fixing module of claim 2, wherein the first linear solenoid rack gear module (18) is detached from the first driving gear (12) by pulling backwardly the first rack gear (18b), when a power is turned on.

4. The XZ stage fixing module of claim 3, wherein the first linear solenoid rack gear module (18) is engaged with the first driving gear (12) by pushing forwardly the first rack gear (18b) by an expansion force produced by a spring in the first linear solenoid (18a), when a power is turned off.

5. The XZ stage fixing module of claim 1, wherein the second linear solenoid rack gear module (28) comprises a second linear solenoid (28a), and a second rack gear (28b) that is connected at one end of the second linear solenoid (28a) and detachably engaged with the second driving gear (22) for preventing the rotation of the second driving gear (22).

6. The XZ stage fixing module of claim 5, wherein the second linear solenoid rack gear module (28) is detached from the second driving gear (22) by pulling backwardly the second rack gear (28b), when the power is turned on.

7. The XZ stage fixing module of claim 6, wherein the second linear solenoid rack gear module (28) is engaged with the second driving gear (22) by pushing forwardly the second rack gear (28b) by an expansion force produced by a spring in the second linear solenoid (28a), when a power is turned off.

8. The XZ stage fixing module of claim 1, wherein the XZ stage fixing module is located on a base frame.
